# EUROPEAN PATENT SPECIFICATION

(11) **EP 4 296 097 B1**
(45) Date of publication and mention of the grant of the patent: **16.04.2025**
(21) Application number: 23181322.1
(22) Date of filing: 23.06.2023
(51) Int. Cl.: B60H 1/32, B60H 1/00

(54) **INTEGRATED VEHICLE THERMAL MANAGEMENT SYSTEM**
INTEGRIERTES WÄRMEVERWALTUNGSSYSTEM FÜR EIN FAHRZEUG
SYSTÈME DE GESTION THERMIQUE DE VÉHICULE INTÉGRÉ

(30) Priority: 24.06.2022 US 202263355224 P; 06.03.2023 US 202363450231 P
(43) Date of publication of application: 27.12.2023
(73) Proprietor: Bollinger Motors Inc., Oak Park, MI 48237 (US)
(72) Inventor: Hensel, Maurice J., Ferndale (US)
(74) Representative: IP Maison

(56) References cited:
- EP-A1- 4 223 566
- WO-A1-2018/045013
- CN-A- 113 212 104
- US-A1- 2020 276 879

## Description

### CROSS REFERENCE TO RELATED APPLICATIONS

This application claims priority to U.S. Provisional Patent Application No. 63/355,224 filed on June 24, 2022, and entitled INTEGRATED VEHICLE THERMAL MANAGEMENT SYSTEM and to U.S. Provisional Patent Application No. 63/450,231 filed on March 6, 2023 and entitled INTEGRATED VEHICLE THERMAL MANAGEMENT SYSTEM.

### TECHNICAL FIELD

The present specification generally relates to thermal management and, more specifically, a thermal management system for electric vehicles.

### BACKGROUND

In cold weather, electric vehicles (EVs) suffer from compounding downfalls. First, the chemistry of current EV high-voltage batteries (HVBs or batteries) is such that performance is significantly degraded at low battery module temperatures. Performance in this case refers both to energy capacity and allowable charge/discharge rates. Second, occupant cabins need to be maintained at a temperature comfortable for humans, and significant continuous heating power may be required to maintain acceptable temperatures.

Generally, in order to generate the heat required to alleviate these issues, vehicles utilize electric coolant heaters (ECHs), where a resistor converts electrical energy to heat energy. They are efficient, however, the limit for their Coefficient of Performance (COP), defined as (Useful Power)/(Input Power), is 1.

COPs for refrigerant compressors are generally stated in terms of cooling power. For example, a COP of 2 means cooling power is twice electrical input. This means heating power, the sum of both, is (electrical power + cooling power) = electrical power x (1 + COP) = 3. Therefore, the heating COP of such a compressor can be 3 if something can be utilized as a heat source. It is also known for vehicles to employ the above strategy as part of a heat pump (HP) system. In many cases the only source of low-grade heat is ambient air.

European Patent publication EP 4 223 566 A1 discloses an electric vehicle, thermal management system and control method therefor. Heat pumps currently known in the art typically have the following issues: First, heat is extracted from ambient air only. In the situation where the air is too cold to evaporate refrigerant, the heat pump is not effective. Second, in the situation where heat can be extracted from warm coolant, delivery to the cabin or other devices usually involves a complex refrigerant network, often with multiple expansion valves, evaporators, sensors, and condensers in parallel. This leads to significant complexity, refrigerant charge, and leak points for high-pressure refrigerant. Third, in the situation where heat can be extracted from warm coolant, the source of coolant heating is the battery rather than the drive unit(s).

Accordingly, there exists a need in the art to provide an improved thermal management system overcoming the aforementioned disadvantages.

### SUMMARY

A thermal management system utilizing a conventional refrigeration loop that simultaneously removes heat from one coolant passage and adds heat to another coolant passage. The system of the present specification is designed to provide efficient sources of heating and/or cooling to the battery and/or the cabin taking advantage of ambient air and/or waste heat from power electronics. A primary way that the system provides efficiency in thermal management is the ability to reconfigure the path that circulated coolant follows through the system's channels. By using the system according to claim 1 described herein, efficient thermal management can be achieved.

A thermal management system for a vehicle having a refrigeration loop including a compressor, a condenser, an expansion valve, and an evaporator, the refrigeration further including a first valve, a second valve, coolant, one or more hydraulic pumps, and coolant passages which include an external radiator channel, a chiller channel, a power source channel, and a drive unit channel, wherein each coolant passage is in fluid communication with the first valve at one end of the coolant passage and in fluid communication with the second valve at an opposite end of the coolant passage, wherein the first valve and the second valve direct the flow of coolant through one of the following paths based on a control signal: 1) a series cooling path wherein coolant is pumped through a closed loop consisting sequentially of the external radiator channel through the chiller channel, the power source channel, and the drive unit channel, 2) a series heating path wherein the coolant is pumped through a closed loop consisting sequentially of the external radiator channel through the drive unit channel, the power source channel, and the chiller channel, 3) a parallel cooling path wherein the coolant is pumped in one closed loop consisting sequentially of the external radiator channel to the drive unit channel, and, in parallel, coolant is pumped in another closed loop consisting sequentially of the chiller channel to the power source channel, or 4) a parallel heating path wherein the coolant is pumped in one closed loop consisting sequentially of the external radiator channel to the chiller channel, and, in parallel, coolant is pumped in another closed loop consisting sequentially of the power source channel to the drive unit channel.

In some embodiments, the external radiator channel includes at least one of a radiator outside of a cabin of the vehicle, radiator fans, an expansion tank, a power converter, a radiator bypass valve, a radiator temperature sensor, the one or more hydraulic pumps. In some embodiments, the drive unit channel includes a drive unit, the condenser, electric coolant heater, an expansion tank, the one or more hydraulic pumps. The thermal management system may provide a power source channel that includes at least one of a battery, a power converter, a secondary cabin heat exchanger, a secondary cabin heat exchanger bypass valve, a battery bypass valve, the one or more hydraulic pumps, a battery temperature sensor.

The chiller channel may include the evaporator, the one or more hydraulic pumps, a cabin heat exchanger, a cabin heat exchanger bypass valve. In some embodiments, the first valve, the second valve, or both are hydraulic 4-way valves. The hydraulic 4-way valves may allow for pressure to be released from a first parallel loop to a second parallel loop. The thermal management system may include at least one of an ambient temperature sensor, a cabin temperature sensor, a battery temperature sensor, one or more coolant temperature sensors. The series cooling path may be used when the ambient temperature is low or during charging of the battery. The series heating path may be used when the battery, the cabin, or both require heat but the ambient temperature is too low to act as a supplementary energy source. The parallel cooling path may be used when the ambient temperature is high. The parallel heating path may be used when the ambient temperature is low and the battery, the cabin, or both require heating, but the ambient temperature is sufficiently high to run the refrigeration loop. The condenser may be a liquid cooled condenser and the condenser adds heat to the coolant in the drive unit channel. The evaporator may be a liquid heated evaporator and the evaporator removes heat from the coolant in the chiller channel. The control signal may determine at least one of the first valve position and the second valve position based on an ambient temperature, a battery temperature, a coolant temperature. The coolant is optionally routed through or around an external radiator, a battery, a cabin heat exchanger, a secondary cabin heat exchanger.

A thermal management process including the steps of detecting at least one of a radiator temperature, a battery temperature, a drive unit temperature, an ambient temperature, a cabin temperature through at least one of an ambient temperature sensor, a cabin temperature sensor, a battery temperature sensor, one or more coolant temperature sensors, determining if a battery needs to be heated or cooled based on a difference between the battery temperature and a battery operating temperature range, determining whether a cabin needs to be heated or cooled based on a difference between the cabin temperature and a cabin temperature setting, adjusting a first valve and a second valve based on at least one of the difference between the battery temperature and a battery operating temperature range, the difference between the cabin temperature and a cabin temperature setting, the ambient temperature, the drive unit temperature, one or more pumps pumping coolant through an external radiator channel, a chiller channel, a power source channel, and a drive unit channel, and a refrigeration loop operating to pump heat from an evaporator to a condenser. The refrigeration loop may cease pumping based on the ambient temperature.

A thermal management system having a refrigeration loop (a compressor, a condenser, an expansion valve, and an evaporator), a first valve, a second valve, coolant, one or more hydraulic pumps, and coolant passages (an external radiator channel, a chiller channel, a power source channel, and a drive unit channel), wherein each coolant passage is in fluid communication with the first valve at one end of the coolant passage and in fluid communication with the second valve at an opposite end of the coolant passage, wherein the thermal management system includes at least one of an ambient temperature sensor, a cabin temperature sensor, a battery temperature sensor, one or more coolant temperature sensors, wherein the refrigeration loop only operates when the ambient temperature is above a predetermined threshold, and wherein the first valve and the second valve positions are determined based on the following 1) the first valve is in the first position and the second valve is in the first position if the ambient temperature is low and the cabin, the battery, or both need cooling; 2) the first valve is in the second position and the second valve is in the second position if ambient temperature is low and the cabin, the battery, or both need heating; 3)the first valve is in the first position and the second valve is in the second position if the cabin, the battery, or both need cooling below the ambient temperature; or 4) the first valve is in the second position and the second valve is in the first position if the ambient temperature is low but sufficiently high that the refrigeration loop may operate as a heat pump to heat the cabin, the battery, or both. The predetermined threshold is -10°C.

### BRIEF DESCRIPTION OF THE DRAWINGS

The embodiments set forth in the Figures are illustrative and exemplary in nature and not intended to limit the subject matter. The following detailed description of the illustrative embodiments can be understood when read in conjunction with the appended Figures, where like structure is indicated with like reference numerals and in which:
FIG. 1a depicts a schematic view of the system in the series cooling mode according to one or more embodiments shown and described herein;
FIG. 1b depicts a schematic view of the external radiator and the cabin cooler according to one or more embodiments shown and described herein;
FIG. 2 depicts a schematic view of the system in the series heating mode according to one or more embodiments shown and described herein;
FIG. 3 depicts a schematic view of the system in the parallel cooling mode according to one or more embodiments shown and described herein;
FIG. 4 depicts a schematic view of the system in the parallel heating mode according to one or more embodiments shown and described herein;
FIG. 5 depicts a schematic view of the system in the series cooling mode according to one or more embodiments shown and described herein;
FIG. 6 depicts a schematic view of the system in the series heating mode according to one or more embodiments shown and described herein;
FIG. 7 depicts a schematic view of the system in the parallel cooling mode according to one or more embodiments shown and described herein; and
FIG. 8 depicts a schematic view of the system in the parallel heating mode according to one or more embodiments shown and described herein;

### DETAILED DESCRIPTION

The thermal management system of the present specification utilizes a conventional refrigeration loop that simultaneously removes heat from one coolant passage and adds heat to another coolant passage. The system of the present specification is designed to provide efficient sources of heating and/or cooling to the battery and/or the cabin taking advantage of ambient air and/or waste heat from power electronics. A primary way that the system provides efficiency in thermal management is the ability to reconfigure the path that circulated coolant follows through the system's channels. By using the processes and systems described herein, efficient thermal management can be achieved. Note that all abbreviations in the Figures are defined in the following Detailed Description.

The goals of the thermal management system as described herein are to 1) maximize operation of external radiator as heater in parallel heating mode; 2) minimize heat rejection to atmosphere in all heating modes; 3) maximize heating coefficient of performance (COP) (heating power/electrical input); and 4) minimize heating or cooling of devices that don't require heating or cooling. The system of the present specification is designed to provide efficient sources of hearing and/or cooling to the battery and/or the cabin taking advantage of ambient air and/or waste heat from power electronics. By using the processes and systems described herein and as shown in the Figures, efficient thermal management can be achieved.

In heating scenarios with low drive unit and power converter loads, all waste heat counts as useful work and the system may operate in the parallel heating mode. This is especially true when the total rate of waste heat production is less than the refrigeration loop evaporator's maximum heat extraction rate. In parallel heating mode the external radiator can be utilized as a heat source for sufficiently cold coolant. External radiator coolant temps are kept low enough by the evaporator to pull heat from ambient air down as low as -10C (although the range can be from +/- 15C from -10C). At zero drive unit and power converter load, the heating COP can be as high as 3 because the sole input is ambient air. At higher drive unit and power converter loads, the input is a blend of ambient air and vehicle-generated waste heat, and the COP decreases. The cooling power of the evaporator depends on the temperature of coolant passing through the evaporator. As power converter load increases, the coolant temp at which the evaporator extraction rate matches waste heat production rate increases. At some point this equivalence point is warmer than ambient and the external radiator cannot be used as a source of heat any longer. As all heat input is now generated by internal waste heat and the COP has been reduced to 1. At any point, the electric coolant heater may also be engaged, usually to expedite initial warm-up, albeit at a COP of ~1.

At extremely low ambient temperatures, ambient air ceases to be an available source of heat. The vehicle can still use waste heat, stored thermal energy, and the electric coolant heater (to convert electrical energy from the battery) as heat sources, but in all cases, there is no external energy being input to the vehicle and the COP cannot exceed 1.

Another useful feature of this system is the multiple purposes served by existing components. The external radiator is not just a radiator to cool the drive units; it can be repurposed to heat coolant chilled by the evaporator. Waste heat is not dissipated unless there is no use for it elsewhere. The battery and/or the cabin can be repurposed as a thermal reservoir. The refrigeration loop is repurposed as a heater in the parallel heating mode.

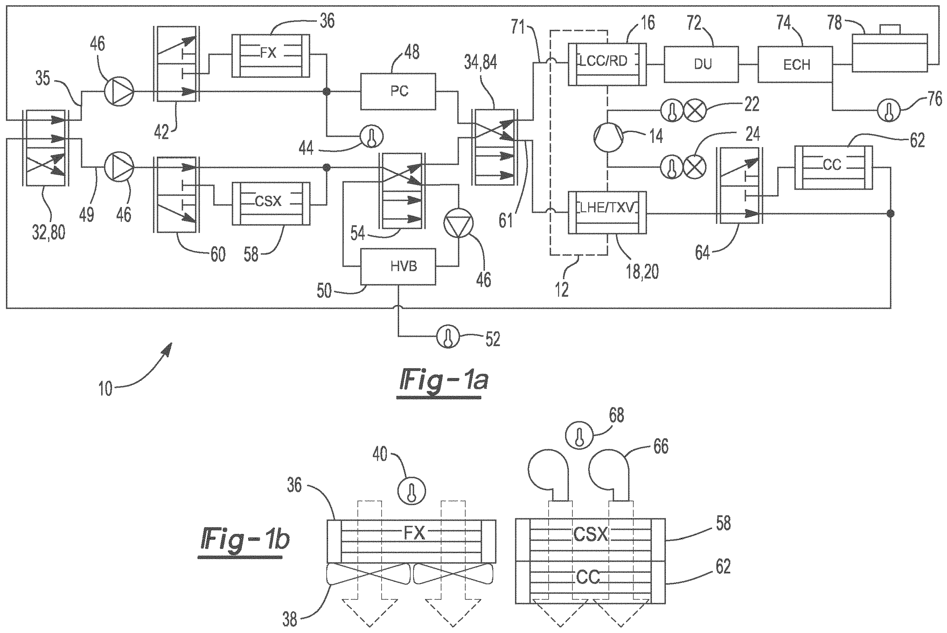

Figures 1a, 1b, and 2-4 illustrate one schematic example of the system in its 4 different modes. In all modes, the refrigeration loop transfers heat from the evaporator to the condenser. Compressor work is converted into heat in the refrigerant of the refrigeration loop in addition to the heat absorbed by the refrigerant in the evaporator. After the condenser, some heat is exchanged with the drive unit, as both can act as a heat source or a heat sink, depending on the relative temperature difference between the coolant and the drive unit. In a heating mode this is less ideal, however, in a cooling mode, a lower condenser inlet temperature increases cooling capacity and efficiency (reduced discharge pressure, reduced pressure ratio, increased COP). The electric coolant heater adds any required heat to achieve a target outlet temperature.

The battery is usually isolated with a dedicated pump for thermal balancing across the battery but is variably connected to the greater thermal management system per battery thermal needs. In heating modes, it may remain connected for longer than necessary if absorbing and storing extra thermal energy is deemed of benefit, e.g. to improve performance during the next cold start. The cabin heat exchanger and the secondary cabin heat exchanger are variably connected, and the cabin blower and the external radiator fan are variably powered, per system needs.

The goals of the present system are to: 1) Maximize operation of the external radiator as heater in heat pump mode; 2) Minimize heat rejection to atmosphere in all heating modes; 3) Maximize heating coefficient of performance (COP) (heating power/electrical input); and 4) Minimize collateral heating and/or cooling of devices that don't need it.

This system allows for the efficiency benefits of a heat pump system but retains the ability to generate heat at low ambient temperatures. This system significantly reduces refrigerant system complexity, albeit by adding some coolant system complexity. This system allows for heat to be extracted from the ambient air, drive unit, battery, and/or cabin via heat pumping. This system allows for heat to be delivered to any of the above.

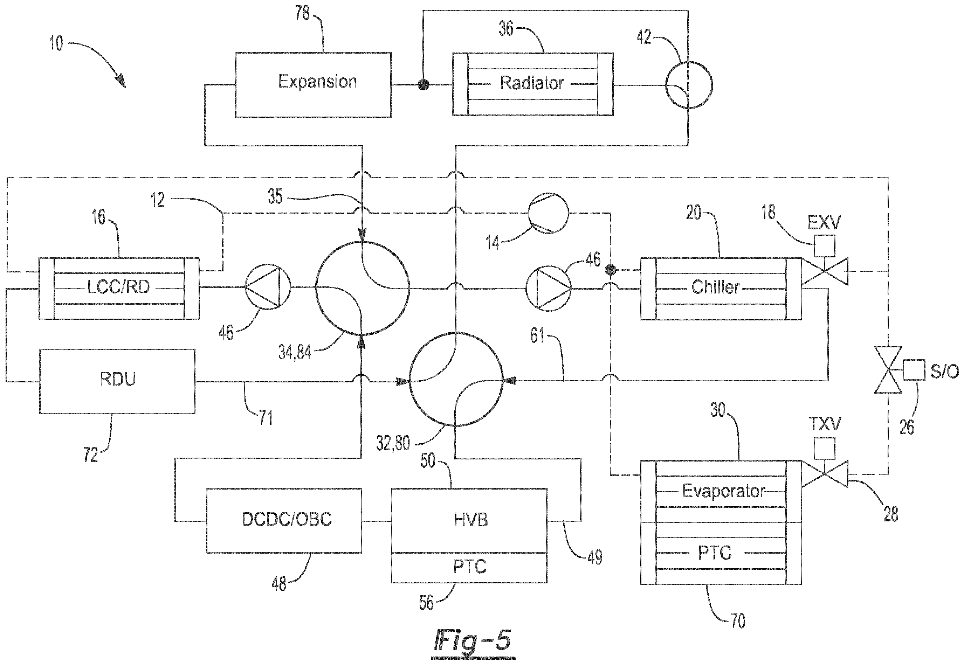

The thermal management system of the present specification is exemplified in two different embodiments. The first embodiment is found in Figures 1-4 and the second embodiment is found in Figures 5-8.

The thermal management system includes a refrigeration loop. The refrigeration loop transfers heat from an evaporator to a condenser. The evaporator may remove heat from coolant in a chiller channel and the condenser may add heat to coolant in a drive unit channel. A compressor adds additional heat to the refrigeration loop. The refrigeration loop may be in constant operation, intermittent operation, or not operated based on heating or cooling needs of the thermal management system. The refrigeration loop contains refrigerant which is used to transfer heat from the evaporator to the condenser. The refrigerant may be R-12, R-22, R-134a, R-1234yf, any chlorofluorocarbon (CFC), hydrochlorofluorocarbon (HCFC), or hydrofluorocarbon (HFC), or, more generally, any working fluid capable of use in a refrigeration cycle.

The refrigeration loop includes a compressor. The compressor forces refrigerant to flow through the refrigeration loop. The compressor may convert low pressure refrigerant in a gaseous state to high pressure refrigerant in a gaseous state as part of the refrigeration loop. The compressor adds heat to the refrigerant during compression roughly equal to the energy required to achieve compression of the refrigerant. The compressor may be driven by an integral electric motor or may be driven by an external power source through a belt or otherwise.

The refrigeration loop includes a condenser. The condenser may transfer heat from the refrigerant to coolant in the drive unit channel. The condenser converts high pressure refrigerant in a gaseous state into high pressure refrigerant in a liquid state. The conversion of the refrigerant from gas to liquid requires the transfer of heat from the refrigerant to coolant or ambient air. The condenser may be in the form of a radiator. The condenser may be a liquid cooled condenser (LCC) or an air cooled condenser. The condenser may be cooled by coolant or air.

The refrigeration loop includes an expansion valve. The expansion valve controls the flow of high pressure liquid refrigerant from the condenser into the evaporator. The expansion valve meters the flow of liquid refrigerant from the high pressure condenser to the low pressure evaporator. The expansion valve may be a thermal expansion valve (TXV), thermostatic expansion valve, electronic expansion valve, orifice tube, or any similar device.

The refrigeration loop includes an evaporator. The evaporator transfers heat from coolant or air to the low pressure liquid refrigerant converting the refrigerant into low pressure gaseous refrigerant. The evaporator may reduce the temperature of the coolant such that the coolant is capable of absorbing heat from other components in the thermal management system. The evaporator may be a radiator or any other heat exchanger. The evaporator may be a liquid heated evaporator (LHE) or an air heated evaporator.

The refrigeration loop may include a high-pressure temperature sensor. The high-pressure temperature sensor may sense the temperature of the refrigerant between the compressor and the condenser, between the condenser and the expansion valve, or both of the refrigeration loop. The high-pressure temperature sensor may be a negative temperature coefficient (NTC) thermistor, a resistance temperature detector, a thermocouple, a semiconductor-based sensor, or any similar temperature sensor capable of detecting the temperature of the refrigerant in the refrigeration loop. The high-pressure temperature sensor is in sufficient proximity to the refrigerant such that it can accurately sense the temperature of the refrigerant.

The refrigeration loop may include a low-pressure temperature sensor. The low-pressure temperature sensor may sense the temperature of the refrigerant between the expansion valve and the evaporator, between the evaporator and the compressor, or both of the refrigeration loop. The low- pressure temperature sensor may be a negative temperature coefficient (NTC) thermistor, a resistance temperature detector, a thermocouple, a semiconductor-based sensor, or any similar temperature sensor capable of detecting the temperature of the refrigerant in the refrigeration loop. The low-pressure temperature sensor is in sufficient proximity to the refrigerant such that it can accurately sense the temperature of the refrigerant.

The refrigeration loop may include a cabin evaporator shutoff valve. The cabin evaporator shutoff valve may allow for a portion of the high pressure liquid refrigerant from the condenser to enter a cabin of the vehicle. The cabin evaporator shutoff valve may be opened to allow for refrigerant flow into the cabin of the vehicle or closed to require refrigerant to flow through the evaporator. Refrigerant may flow into a cabin evaporator expansion valve when the cabin evaporator shutoff valve is open.

The refrigeration loop may include a cabin evaporator expansion valve. The cabin evaporator expansion valve may control the flow of high pressure liquid refrigerant into a cabin evaporator. The expansion valve may be a thermal expansion valve (TXV), thermostatic expansion valve, electronic expansion valve, orifice tube, or any similar device.

The refrigeration loop may include a cabin evaporator. The cabin evaporator may absorb heat from the cabin to reduce the internal temperature of the cabin. The cabin evaporator may be a radiator. The cabin evaporator may convert low pressure liquid refrigerant into low pressure gaseous refrigerant by absorbing heat from its environment.

The thermal management system includes a first valve and a second valve. The first valve and second valve may be hydraulic 4-way valves. The hydraulic 4-way valves may be electrically driven between different positions. The hydraulic 4-way valves may have a first position and a second position. The first valve and the second valve may control the flow path of coolant through an external radiator channel, a chiller channel, a power source channel, and a drive unit channel. The first valve and the second valve may control the coolant flow path and optimize the coolant flow path based on heating or cooling requirements of the vehicle. The first valve and the second valve may allow the coolant to flow through one of four paths by being in a first position and a first position, a first position and a second position, a second position and a first position, or a second position and a second position, respectively.

The thermal management system includes four coolant passages. The four coolant passages include an external radiator channel, a chiller channel, a power source channel, and a drive unit channel. The coolant passages may include hoses and/or pipes in addition to at least one of radiators, heat exchangers, electrical components, electronic components, expansion tanks, hydraulic pumps, other components that may provide or require heat. The coolant passages contain coolant and allow for coolant to exchange heat with various components. Coolant is pumped through the coolant passages using hydraulic pumps. Each coolant passage has one end of the coolant passage in fluid communication with the first valve and another end in fluid communication with the second valve. The first valve and the second valve may be positioned to create a single flow path through all four coolant channels in series or alternatively may create two flow paths through two coolant passages in parallel.

The coolant passages of the thermal management system may contain coolant. The coolant may transfer heat between different components of the thermal management system and between different coolant passages. The coolant may be a liquid coolant. The coolant may be water, water mixed with ethylene glycol or propylene glycol, or any other liquid capable of transferring heat by passing through the coolant passages.

The thermal management system includes an external radiator channel. The external radiator channel may allow for coolant in the system to exchange heat with ambient air. The external radiator channel may include hoses and/or pipes in addition to an external radiator, one or more hydraulic pumps, an external radiator bypass valve, an external radiator coolant temperature sensor, a power converter, an expansion tank. The heat exchanged between the external radiator and ambient air allows for the thermal management system to release heat from the system when excess heat exists or absorb heat when excess heat is needed in the system.

The external radiator channel of the thermal management system may include an external radiator. The external radiator may be referred to as a front exchanger (FX). The external radiator may enable coolant to exchange heat with ambient air. The external radiator may allow heat from the coolant to transferred to ambient air or allow heat from ambient air to be transferred to the coolant. The external radiator may be a tubular type radiator, cellular type radiator, or any other heat exchanger capable of transferring heat between air and the coolant. The external radiator may operate passively through convection of ambient air or the external radiator may be provided with forced ambient air through locomotion of the vehicle or by pushing ambient air using an external radiator fan.

The external radiator channel of the thermal management system may include an external radiator fan. The external radiator fan may force ambient air through the external radiator. The external radiator fan may increase the rate of heat exchanged between the coolant and ambient air through the external radiator. The external radiator fan may be an axial fan, propeller fan, centrifugal fan, mixed flow fan, cross flow fan, or any fan capable of increasing the flow rate of ambient air through or over the external radiator. The external radiator fan may be activated and deactivated based on the speed of the vehicle, difference between coolant temperature and ambient air temperature, or other similar factors. The difference between coolant temperature and ambient air temperature may be determined by an ambient temperature sensor and an external radiator coolant temperature sensor, respectively.

The external radiator channel of the thermal management system may include an ambient temperature sensor. The ambient temperature sensor measures the temperature of ambient air. Ambient air may be any atmospheric air outside of the vehicle cabin. The ambient temperature sensor may be a negative temperature coefficient (NTC) thermistor, a resistance temperature detector, a thermocouple, a semiconductor-based sensor, or any similar temperature sensor capable of detecting the temperature of ambient air.

The external radiator channel of the thermal management system may include an external radiator bypass valve, The external radiator bypass valve may allow for coolant to pass through the external radiator channel without passing through the external radiator. The external radiator bypass valve may have two positions wherein coolant passes through the external radiator in the first position and does not pass through the external radiator in the second position. The external radiator bypass valve may be a hydraulic 3-way valve. The hydraulic 3-way valve may be electrically toggled between the first position and the second position based on a control signal. The external radiator bypass valve may be set to the first position or the second position based on the temperature of the coolant passing through the external radiator measured by an external radiator coolant temperature sensor.

The external radiator channel of the thermal management system may include an external radiator coolant temperature sensor. The external radiator coolant temperature sensor may measure the temperature of coolant before at least one of entering the external radiator, inside of the external radiator, after exiting the external radiator. The external radiator coolant temperature sensor may be a negative temperature coefficient (NTC) thermistor, a resistance temperature detector, a thermocouple, a semiconductor-based sensor, or any similar temperature sensor capable of detecting the temperature of coolant before at least one of entering the external radiator, inside of the external radiator, after exiting the external radiator.

The external radiator channel of the thermal management system may include one or more hydraulic pumps. The one or more hydraulic pumps may function to pump or circulate coolant through one or more of the coolant passages. The one or more hydraulic pumps may be at least one of a gear pump, a rotary vane pump, a screw pump, a bent axis pump, an inline axial piston pump, a radial piston pump, any other pump capable of pumping or circulating a liquid.

The external radiator channel of the thermal management system may include a power converter (PC). The power converter may include at least one of an on-board-charger (OBC), DC to DC transformer (DCDC), other related electrical management systems. The on-board-charger may convert external AC power into DC power to charge a battery. The DC to DC transformer may convert DC power of a battery voltage into DC power of a different voltage which is capable of turning drive units or other DC voltages that the vehicle may require.

The thermal management system includes a power source channel. The power source channel may allow for heat to be transferred between the coolant and a battery. The power source channel may include hoses and/or pipes in addition to a battery and a power converter

The power source channel of the thermal management system may include a battery. The battery may provide electrical power to the vehicle. The electrical power may be used to power at least one of drive units which propel the vehicle, power hydraulic pumps which circulate coolant, power the compressor of the refrigeration loop, power fans or blowers, power control circuitry, power resistive heaters, power other various electrical or electronic components or subsystems of the vehicle. The battery may have integral internal coolant passages, external heat exchangers in thermal contact with the battery which can circulate coolant, or any other means of facilitating thermal communication between the battery and coolant. The battery may be formed of a plurality of electrochemical cells. The battery may be a high voltage battery (HVB).

The power source channel of the thermal management system may include a battery temperature sensor. The battery temperature sensor may monitor the temperature of the battery. The battery temperature may be monitored to ensure that the battery temperature stays within a safe operating range. The battery temperature sensor may detect when the battery temperature is no longer within a safe operating range.

The power source channel of the thermal management system may include a battery bypass valve. The battery bypass valve may enable coolant in the power source channel to bypass the battery and not exchange heat with the battery. The battery bypass valve may have two positions wherein coolant passes from the power source channel through the battery and back into the power source channel in the first position and coolant isolated from the power source channel circulates in a closed loop through or near the battery in the second position. The battery bypass valve may be in the first position when heating or cooling of the battery is required or in the second position when heating or cooling of the battery is not required. The battery bypass valve may be a hydraulic 3 way valve. The hydraulic 3 way valve may be electrically toggled between the first position and the second position based on a control signal. The battery bypass valve may be set to the first position or the second position based on the temperature of the battery measured by the battery temperature sensor.

The power source channel of the thermal management system may include a resistive battery heater. The resistive battery heater may enable electrical power from the battery to heat the battery such that it enters or maintains a safe operating temperature range. The resistive battery heater may be a positive temperature coefficient (PTC) resistive heater or any other heater capable of converting electrical power into heat. The restive battery heater may be utilized by the thermal management system when ambient air temperature is sufficiently low that the refrigeration loop is incapable of operation.

The power source channel of the thermal management system may include a secondary cabin heat exchanger. The secondary cabin heat exchanger may be referred to as a cabin secondary exchanger (CSX). The secondary cabin heat exchanger may provide heat to or remove heat from the cabin. The secondary cabin heat exchanger may provide heat to the cabin while the cabin heat exchanger is removing heat from the cabin to enable the cabin heat exchanger and secondary cabin heat exchanger to defog the cabin. The cabin secondary heat exchanger may be a radiator. The cabin secondary heat exchanger may be an air cooled or heated radiator or other heat exchanger. The cabin secondary heat exchanger may allow for heat to be exchanged between the coolant in the power source channel and cabin air. The coolant may provide heat to the cabin air or remove heat from the cabin air. The secondary cabin heat exchanger may be utilized or bypassed based on the position of a secondary cabin heat exchanger bypass valve.

The power source channel of the thermal management system may include a secondary cabin heat exchanger bypass valve. The secondary cabin heat exchanger bypass valve may enable coolant in the power source channel to bypass the secondary cabin heat exchanger and not exchange heat with the cabin air. The secondary cabin heat exchanger bypass valve may have two positions wherein coolant passes through the secondary cabin heat exchanger in the first position and does not pass through the secondary cabin heat exchanger in the second position. The secondary cabin heat exchanger bypass valve may be a hydraulic 3 way valve. The hydraulic 3 way valve may be electrically toggled between the first position and the second position based on a control signal. The secondary cabin heat exchanger bypass valve may be set to the first position or the second position based on user input, one or more temperature sensor readings, or a combination thereof.

The thermal management system includes a chiller channel. The chiller channel may allow for heat to be transferred from the coolant to the refrigeration loop through the evaporator. The chiller channel may include hoses and/or pipes in addition to at least one of a liquid heated evaporator, cabin heat exchanger, cabin heat exchanger bypass valve, hydraulic pump.

The chiller channel of the thermal management system may include a cabin heat exchanger. The cabin heat exchanger may otherwise be referred to as a cabin cooler (CC). The cabin heat exchanger may remove heat from the cabin. The cabin heat exchanger may remove heat from the cabin by receiving cold coolant exiting the evaporator which can absorb heat from ambient air or cabin air. The secondary cabin heat exchanger may provide heat to the cabin while the cabin heat exchanger is removing heat from the cabin to enable the cabin heat exchanger and secondary cabin heat exchanger to defog the cabin. The cabin heat exchanger may remove heat from the cabin and act as an air conditioner. The cabin heat exchanger may be a radiator or other heat exchanger. The cabin heat exchanger may be an air heated radiator or other heat exchanger. The cabin heat exchanger may allow for heat to be exchanged between the coolant in the chiller channel and cabin air. The coolant may remove heat from the cabin air. The cabin heat exchanger may be utilized or bypassed based on the position of a cabin heat exchanger bypass valve.

The chiller channel of the thermal management system may include a cabin heat exchanger bypass valve. The cabin heat exchanger bypass valve may enable coolant in the chiller channel to bypass the cabin heat exchanger and not exchange heat with the cabin air. The cabin heat exchanger bypass valve may have two positions wherein coolant passes through the cabin heat exchanger in the first position and does not pass through the cabin heat exchanger in the second position. The cabin heat exchanger bypass valve may be a hydraulic 3 way valve. The hydraulic 3 way valve may be electrically toggled between the first position and the second position based on a control signal. The cabin heat exchanger bypass valve may be set to the first position or the second position based on user input, one or more temperature sensor readings, or a combination thereof.

The chiller channel of the thermal management system may include a cabin blower. The cabin blower may force external ambient air or cabin air through the cabin heat exchanger, the secondary cabin heat exchanger, or both. The cabin blower may facilitate a greater rate of heat exchange between the cabin heat exchanger, the secondary cabin heat exchanger, or both and air. The cabin blower may be an axial fan, propeller fan, centrifugal fan, mixed flow fan, cross flow fan, or any fan capable of increasing the flow rate of air through or over the cabin heat exchanger, the secondary cabin heat exchanger, or both.

The chiller channel of the thermal management system may include a cabin temperature sensor. The cabin temperature sensor may measure the temperature of cabin air for the thermal management system. The measured air temperature may combine with user input to adjust routing of coolant, the operation of fans, or both in the thermal management system. The cabin temperature sensor may be a negative temperature coefficient (NTC) thermistor, a resistance temperature detector, a thermocouple, a semiconductor-based sensor, or any similar temperature sensor capable of detecting the temperature of the cabin air.

The chiller channel of the thermal management system may include a resistive cabin heater. The resistive cabin heater may directly convert electrical power into heat which is transferred to air which is blown by the cabin blower into the vehicle cabin. The resistive cabin heater may provide heat to the vehicle cabin. The resistive cabin heater may be a positive temperature coefficient (PTC) heater, or any other resistive heater which converts electrical power into heat. The resistive cabin heater may be activated or deactivated based on a control signal from the thermal management system.

The thermal management system includes a drive unit channel. The drive unit channel may allow for heat to be transferred between the coolant and a drive unit and/or from the condenser to the coolant. The drive unit channel may include hoses and/or pipes in addition to at least one of the condenser, a drive unit, one or more hydraulic pumps, an electric coolant heater, an electric coolant heater temperature sensor, an expansion tank.

The drive unit channel of the thermal management system may include a drive unit (DU). The drive unit may produce heat when propelling the vehicle and the thermal management system may absorb that heat into the coolant. The drive unit may transfer heat to the coolant by passing the coolant through internal passages in the drive unit. The drive unit may be a permanent magnet brushless DC motor, an induction motor, a switched reluctance motor, a permanent reluctance motor, an axial flux motor, any other motor which converts electrical power into mechanical rotation or any combination thereof. The drive unit may be referred to as a rear drive unit (RDU)

The drive unit channel of the thermal management system may include an electric coolant heater (ECH). The electric coolant heater may convert electrical energy resistively into heat which is transferred into the coolant. The coolant may need to be heated by the electric coolant heater when ambient air temperatures are sufficiently low. The electric coolant heater may be a PTC heater or any other resistive heater which converts electrical energy into heat.

The drive unit channel of the thermal management system may include an electric coolant heater temperature sensor. The electric coolant heater temperature sensor may measure the temperature of coolant exiting the electric coolant heater for the thermal management system. The measured coolant may combine with user input to adjust routing of coolant, the operation of fans, or both in the thermal management system. The electric coolant heater temperature sensor may be a negative temperature coefficient (NTC) thermistor, a resistance temperature detector, a thermocouple, a semiconductor-based sensor, or any similar temperature sensor capable of detecting the temperature of the cabin air.

The drive unit channel of the thermal management system may include an expansion tank. The expansion tank may be a fluid reservoir which supplies or stores the coolant as a result of the coolant passages expanding or contracting, respectively, or the coolant decreasing in volume or increasing in volume, respectively, due to coefficients of thermal expansion and the changing temperature. The expansion tank may allow for the coolant to be refilled if any coolant is lost due to spillage, evaporation, draining for service, or any other activity resulting in a loss of coolant. The expansion tank may be a metal, plastic, other suitable material or combination thereof.

The thermal management system may include a first valve first position. The first valve first position may be one of two positions that the first valve may occupy. The first valve in the first valve first position may allow for heat to be exchanged from the drive unit channel into the external radiator channel and from the chiller channel into the power source channel. The first valve in the first valve first position may allow for coolant to flow from the drive unit channel into the external radiator channel and from the chiller channel into the power source channel.

The thermal management system may include a first valve second position. The first valve second position may be one of two positions that the first valve may occupy. The first valve in the first valve second position may allow for heat to be exchanged from the drive unit channel into the power source channel and from the chiller channel into the external radiator channel. The first valve in the first valve first position may allow for coolant to flow from the drive unit channel into the power source channel and from the chiller channel into the external radiator channel.

The thermal management system may include a second valve first position. The second valve first position may be one of two positions that the second valve may occupy. The second valve in the second valve first position may allow for heat to be exchanged from the external radiator channel into the chiller channel and from the power source channel into the drive unit channel. The second valve in the second valve first position may allow for coolant to flow from the external radiator channel into the chiller channel and from the power source channel into the drive unit channel.

The thermal management system may include a second valve second position. The second valve second position may be one of two positions that the second valve may occupy. The second valve in the second valve second position may allow for heat to be exchanged from the external radiator channel into the drive unit channel and from the power source channel into the chiller channel. The second valve in the second valve first position may allow for coolant to flow from the external radiator channel into the drive unit channel and from the power source channel into the chiller channel.

The thermal management system may be configured into a series cooling mode. Examples of the series cooling mode are shown in Figures 1a and 5. The series cooling mode may alternatively be referred to as an active cooling mode. The series cooling mode may exist when the first valve is in the first valve first position and the second valve is in the second valve first position. The first valve and the second valve in each respective position create a series flow path through all of the coolant channels of the system. The series cooling mode may be utilized when temperatures above ambient are sufficient to cool the cabin, the battery, or both.

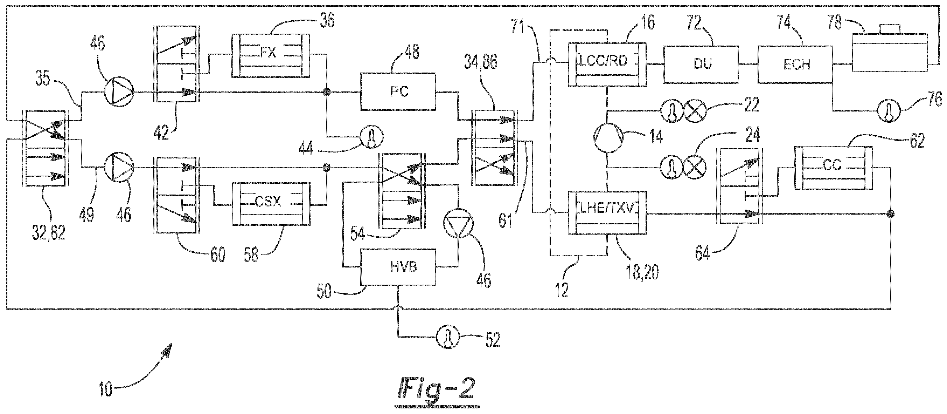

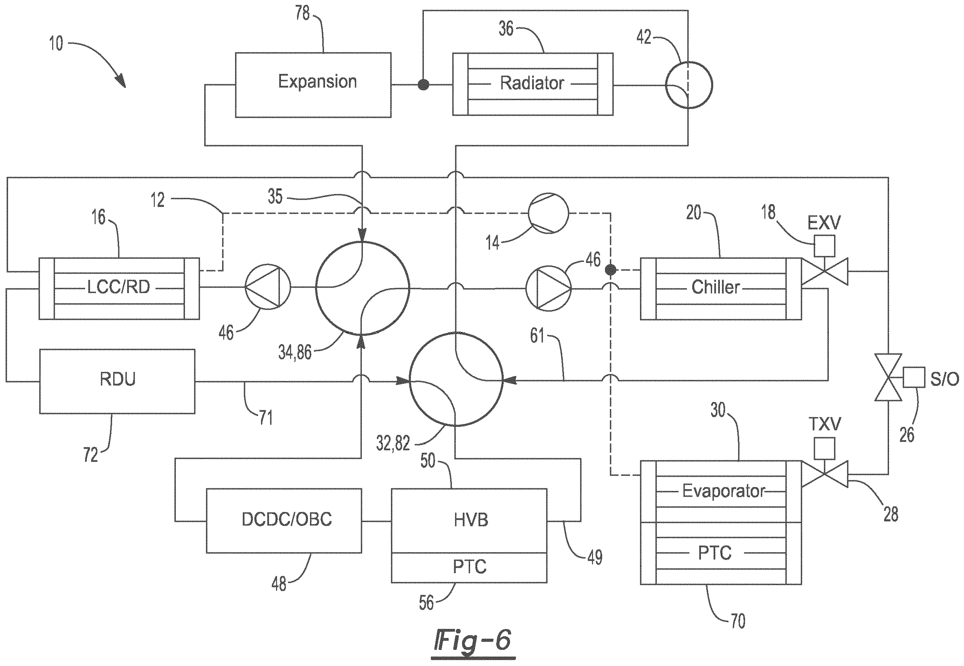

The thermal management system may be configured into a series heating mode. Examples of the series heating mode are shown in Figures 2 and 6. The series heating mode may exist when the first valve is in the first valve second position and the second valve is in the second valve second position. The first valve and the second valve in each respective position create a series flow path through all of the coolant channels of the system. The series heating mode may be utilized when temperatures below ambient are sufficient to heat the cabin, the battery, or both.

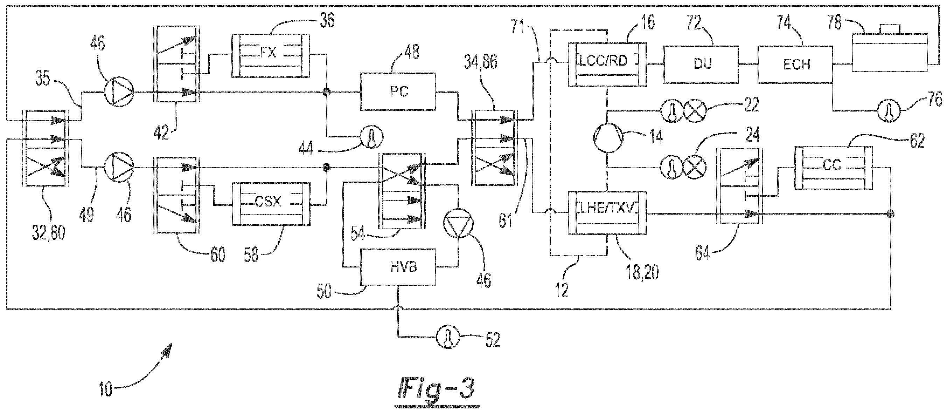

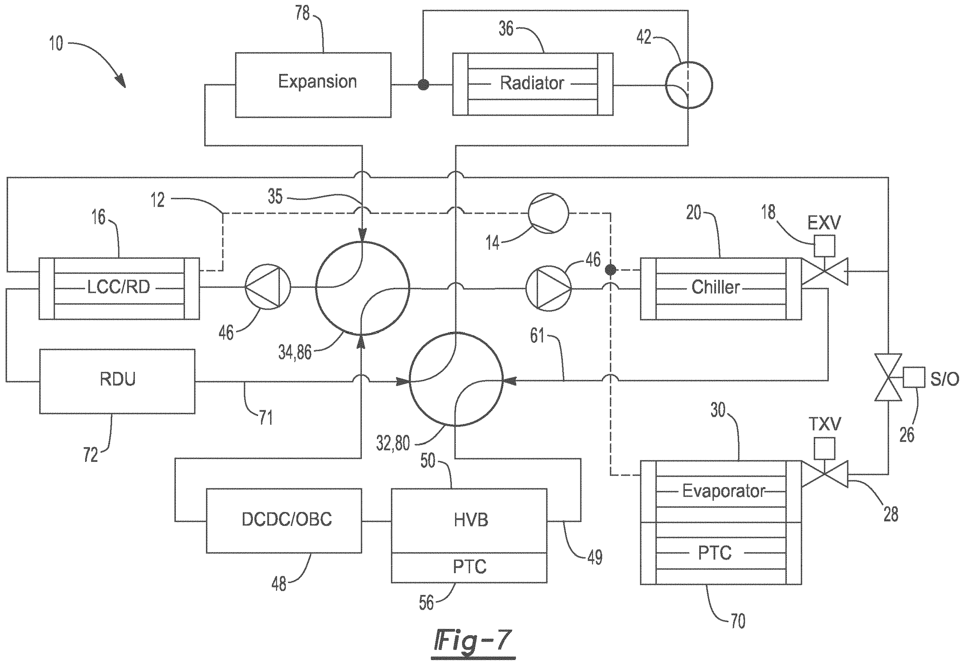

The thermal management system may be configured into a parallel cooling mode. Examples of the parallel cooling mode are shown in Figures 3 and 7. The parallel cooling mode may exist when the first valve is in the first valve first position and the second valve is in the second valve second position. The first valve and the second valve in each respective position create two parallel flow paths. The parallel flow paths include a hot parallel flow path through the condenser and a cold parallel flow path through the evaporator. The parallel cooling mode is utilized when coolant temperature below the ambient temperature is required to cool the battery, the cabin, or both.

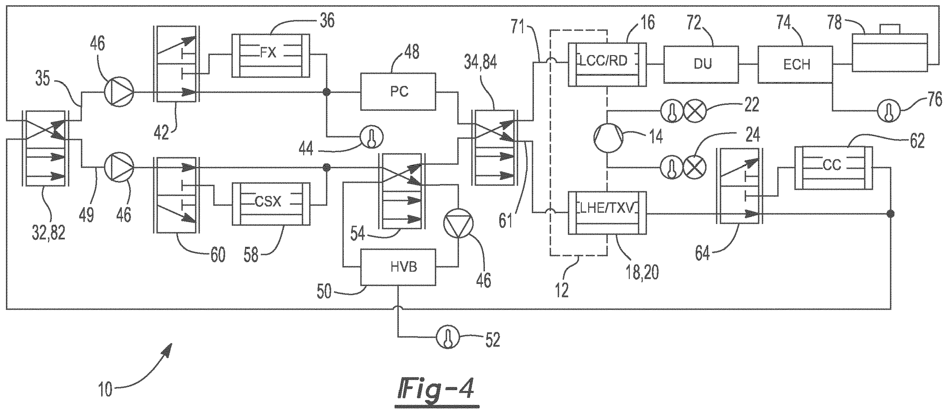

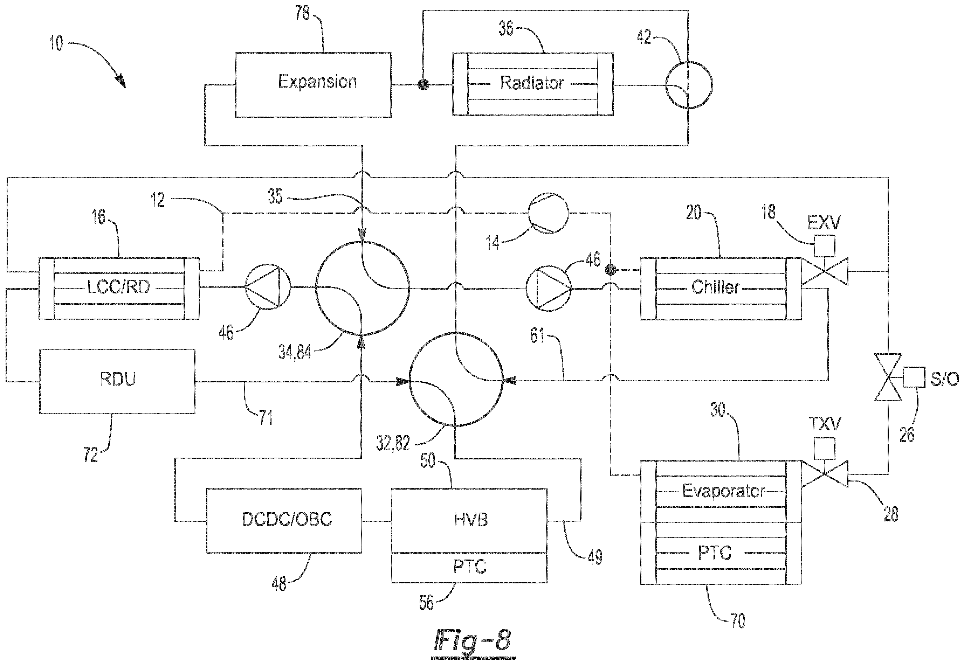

The thermal management system may be configured into a parallel heating mode. Examples of the parallel heating mode are shown in Figures 4 and 8. The parallel heating mode may alternatively be referred to as a heat pump mode. The parallel heating mode may exist when the first valve is in the first valve second position and the second valve is in the second valve first position. The first valve and the second valve in each respective position create two parallel flow paths. The parallel flow paths include a hot parallel flow path through the condenser and a cold parallel flow path through the evaporator. The parallel heating mode is utilized when coolant temperature above the ambient temperature is required to heat the battery, the cabin, or both. In this configuration, the system operates as a heat pump with a COP greater than one by using the external radiator to absorb heat into cooled coolant.

### Illustrative Examples

The following descriptions of the Figures are provided to illustrate the teachings herein but are not intended to limit the scope thereof.

Figures 1 to 4 present a schematic illustration of a thermal management system 10 according to the teachings herein. The thermal management system 10 includes a refrigeration loop 12. The refrigeration loop 12 includes a compressor 14, condenser 16, expansion valve 18, and evaporator 20. Refrigerant is contained in the refrigeration loop 12. The refrigerant is compressed, heated, and circulated by the compressor 14, cooled in the condenser 16, and heated in the evaporator 20. The refrigerant loop 12 may also contain a high-pressure temperature sensor 22 between the compressor 14 and the condenser 16 in addition to a low-pressure temperature sensor 24 between the evaporator 20 and the compressor 14. The high-pressure temperature sensor 22 and the low-pressure temperature sensor 24 detect the temperature of coolant in each respective position. The refrigeration loop 12 operates to transfer heat from the chiller channel 61 to the drive unit channel 71.

The thermal management system 10 has a first valve 32 and a second valve 34. The first valve 32 and the second valve 34 control the flow path of coolant through the external radiator channel 35, power source channel 49, chiller channel 61, and the drive unit channel 71.

Figures 1a and 1b illustrate the thermal management system 10 in the series cooling mode. The series cooling mode is achieved by setting the first valve 32 and the second valve 34 in the first valve first position 80 and the second valve first position 84, respectively.

The thermal management system 10 has an external radiator channel 35. The external radiator channel 35 serves as a flow path for coolant. Coolant exiting the first valve 32 enters the external radiator channel 35. The external radiator channel 35 first directs coolant through a hydraulic pump 46 which forces the coolant to flow through the external radiator channel 35. The coolant next flows through an external radiator bypass valve 42. The external radiator bypass valve 42 routes the coolant either through or around the external radiator 36. If the external radiator bypass valve 42 is routing the coolant through the external radiator 36, the external radiator 36 enables the coolant to exchange heat with ambient air. External radiator 36 heat exchange with ambient air may be improved by using the external radiator fan 38 which forces ambient air through the external radiator 36. The temperatures of coolant exiting the external radiator 36 and ambient air may be monitored using the external radiator coolant temperature sensor 44 and ambient air temperature sensor 40, respectively. Finally, coolant passes through the power converter 48 and heat is exchanged between the coolant and the power converter 48. The coolant passes through the second valve 34 after exiting the power converter 48 which next directs the coolant through the chiller channel 61.

The thermal management system 10 has a chiller channel 61. Coolant in the chiller channel 61 first passes through the evaporator 20. The evaporator 20 removes heat from the coolant when the refrigeration loop 12 is operating. The coolant next passes through the cabin heat exchanger bypass valve 64 which directs the coolant either through or around the cabin heat exchanger 62. If the coolant is directed through the cabin heat exchanger 62, the cabin heat exchanger 62 allows for the coolant to exchange heat with either ambient air or cabin air. Cabin heat exchanger 62 heat exchange with ambient air or cabin air may be improved by using the cabin blower 66 which forces ambient air or cabin air through the cabin heat exchanger 62. The temperature of cabin air may be monitored by the cabin temperature sensor 68. The coolant then flows through the first valve 32. The first valve 32 next directs coolant through the power source channel 49.

The thermal management system 10 has a power source channel 49. The power source channel 49 first directs coolant through a hydraulic pump 46 which forces the coolant to flow through the power source channel 49. The coolant next flows through the secondary cabin heat exchanger bypass valve 60 which directs the flow of coolant either through or around the secondary cabin heat exchanger 58. If the coolant flows through the secondary cabin heat exchanger 58, the secondary cabin heat exchanger 58 allows for the coolant to exchange heat with ambient air or cabin air. Secondary cabin heat exchanger 58 heat exchange with ambient air or cabin air may be improved by using the cabin blower 66 which forces ambient air or cabin air through the secondary cabin heat exchanger 58. The coolant next flows through the battery bypass valve 54 which directs the flow of coolant either through or around the battery 50. If the coolant flows through the battery 50, the battery 50 exchanges heat with the coolant. If the coolant is routed around the battery 50, a hydraulic pump 46 circulates a closed loop of coolant contained in the battery 50 independently to maintain uniform temperature in the battery 50. The coolant next flows through the second valve 34. The second valve 34 next routes coolant through the drive unit channel 71.

The thermal management system 10 has a drive unit channel 71. The drive unit channel 71 first directs coolant through the condenser 16. The condenser 16 transfers heat from the refrigeration loop 12 to the coolant in the drive unit channel 71 when the refrigeration loop 12 is operating. The coolant next passes through the drive unit 72 and heat is exchanged between the drive unit 72 and the coolant. The coolant next passes through the electric coolant heater 74. The electric coolant heater 74 provides heat to the coolant when the electric coolant heater 74 is operational. The temperature of the coolant exiting the electric coolant heater 74 is monitored by the electric coolant heater temperature sensor 76. The coolant next passes through the expansion tank 78 which provides excess stored coolant to the system 10 or stores excess coolant in the system 10 when required due to thermal expansion or contraction during operation. The coolant finally returns to the first valve 32 which directs the coolant back into the external radiator channel 35.

Figure 2 illustrates the thermal management system 10 in the series heating mode. The series heating mode utilizes the same thermal management system 10 components as the series cooling mode. The difference between the series heating mode and the series cooling mode is that the first valve 32 and the second valve 34 are in the first valve second position 82 and the second valve second position 86, respectively. This first valve second position 82 and the second valve second position 86 result in the coolant flowing sequentially through the external radiator channel 35, the drive unit channel 71, the power source channel 49, and the chiller channel 61.

Figure 3 illustrates the thermal management system 10 in the parallel cooling mode. The parallel cooling mode utilizes the same thermal management system 10 components as the series cooling mode. The difference between the parallel cooling mode and the series cooling mode is that the first valve 32 and the second valve 34 are in the first valve first position 80 and the second valve second position 86, respectively. The first valve first position 80 and the second valve second position 86 result in the thermal management system 10 having two independently circulating loops of coolant. The first coolant loop is formed by the external radiator channel 35 and the drive unit channel 71. The second coolant loop is formed by the power source channel 49 and the chiller channel 61.

Figure 4 illustrates the thermal management system 10 in the parallel heating mode. The parallel heating mode utilizes the same thermal management system 10 components as the series cooling mode. The difference between the parallel heating mode and the series cooling mode is that the first valve 32 and the second valve 34 are in the first valve second position 82 and the second valve first position 84, respectively. The first valve second position 82 and the second valve first position 84 result in the thermal management system 10 having two independently circulating loops of coolant. The first coolant loop is formed by the external radiator channel 35 and the chiller channel 61. The second coolant loop is formed by the power source channel 49 and the drive unit channel 71.

Figures 5 to 8 present an alternative schematic illustration of a thermal management system 10 according to the teachings herein. The thermal management system 10 includes a refrigeration loop 12. The refrigeration loop 12 includes a compressor 14, condenser 16, expansion valve 18, and evaporator 20 in addition to a cabin evaporator shutoff valve 26, cabin evaporator expansion valve 28, and cabin evaporator 30. Refrigerant is contained in the refrigeration loop 12. The refrigerant is compressed, heated, and circulated by the compressor 14, cooled in the condenser 16, and heated in the evaporator 20. The refrigerant may alternatively be heated in the cabin evaporator 30 when the cabin evaporator shutoff valve 26 is open. The refrigeration loop 12 operates to transfer heat from the chiller channel 61, and optionally cabin air or ambient air through the cabin evaporator 30, to the drive unit channel 71.

The cabin evaporator shutoff valve 26, cabin evaporator expansion valve 28, and cabin evaporator 30 create a branch of the refrigeration loop 12 that is capable of cooling the cabin directly. The alternative schematic illustration of the thermal management system 12 also illustrates a resistive cabin heater 70 which may convert electrical power into heat directly for heating the cabin.

The thermal management system 10 has a first valve 32 and a second valve 34. The first valve 32 and the second valve 34 control the flow path of coolant through the external radiator channel 35, power source channel 49, chiller channel 61, and the drive unit channel 71.

Figure 5 illustrates the thermal management system 10 in the series cooling mode. The series cooling mode is achieved by setting the first valve 32 and the second valve 34 in the first valve first position 80 and the second valve first position 84, respectively.

The thermal management system 10 has an external radiator channel 35. The external radiator channel 35 serves as a flow path for coolant. Coolant exiting the first valve 32 enters the external radiator channel 35. The external radiator channel 35 first directs coolant through an external radiator bypass valve 42. The external radiator bypass valve 42 routes the coolant either through or around the external radiator 36. If the external radiator bypass valve 42 is routing the coolant through the external radiator 36, the external radiator 36 enables the coolant to exchange heat with ambient air. The coolant next passes through the expansion tank 78 which provides excess stored coolant to the system 10 or stores excess coolant in the system 10 when required due to thermal expansion or contraction during operation. The coolant passes through the second valve 34 after exiting the expansion tank 78 which next directs the coolant through the chiller channel 61.

The thermal management system 10 has a chiller channel 61. The chiller channel 61 first directs coolant through a hydraulic pump 46 which forces the coolant to flow through the chiller channel 61. Coolant in the chiller channel 61 next passes through the evaporator 20. The evaporator 20 removes heat from the coolant when the refrigeration loop 12 is operating. The coolant then flows through the first valve 32. The first valve 32 next directs coolant through the power source channel 49.

The thermal management system 10 has a power source channel 49. The power source channel 49 first directs coolant through the battery 50. The battery 50 exchanges heat with the coolant. Next, coolant passes through the power converter 48 and heat is exchanged between the coolant and the power converter 48. The coolant next flows through the second valve 34. The second valve 34 next routes coolant through the drive unit channel 71.

The thermal management system 10 has a drive unit channel 71. The drive unit channel 71 first directs coolant through a hydraulic pump 46 which forces the coolant to flow through the drive unit channel 71. The drive unit channel 71 next directs coolant through the condenser 16. The condenser 16 transfers heat from the refrigeration loop 12 to the coolant in the drive unit channel 71 when the refrigeration loop 12 is operating. The coolant next passes through the drive unit 72 and heat is exchanged between the drive unit 72 and the coolant. The coolant finally returns to the first valve 32 which directs the coolant back into the external radiator channel 35.

Figure 6 illustrates the thermal management system 10 in the series heating mode. The series heating mode utilizes the same thermal management system 10 components as the series cooling mode. The difference between the series heating mode and the series cooling mode is that the first valve 32 and the second valve 34 are in the first valve second position 82 and the second valve second position 86, respectively. This first valve second position 82 and the second valve second position 86 result in the coolant flowing sequentially through the external radiator channel 35, the drive unit channel 71, the power source channel 49, and the chiller channel 61.

Figure 7 illustrates the thermal management system 10 in the parallel cooling mode. The parallel cooling mode utilizes the same thermal management system 10 components as the series cooling mode. The difference between the parallel cooling mode and the series cooling mode is that the first valve 32 and the second valve 34 are in the first valve first position 80 and the second valve second position 86, respectively. The first valve first position 80 and the second valve second position 86 result in the thermal management system 10 having two independently circulating loops of coolant. The first coolant loop is formed by the external radiator channel 35 and the drive unit channel 71. The second coolant loop is formed by the power source channel 49 and the chiller channel 61.

Figure 8 illustrates the thermal management system 10 in the parallel heating mode. The parallel heating mode utilizes the same thermal management system 10 components as the series cooling mode. The difference between the parallel heating mode and the series cooling mode is that the first valve 32 and the second valve 34 are in the first valve second position 82 and the second valve first position 84, respectively. The first valve second position 82 and the second valve first position 84 result in the thermal management system 10 having two independently circulating loops of coolant. The first coolant loop is formed by the external radiator channel 35 and the chiller channel 61. The second coolant loop is formed by the power source channel 49 and the drive unit channel 71.

Although the embodiments of the present invention have been illustrated in the accompanying drawings and described in the foregoing detailed description, it is to be understood that the present specification is not to be limited to just the embodiments disclosed, but that the invention described herein is capable of numerous modifications within the scope of the claims hereafter.

It is noted that the terms "substantially" and "about" may be utilized herein to represent the inherent degree of uncertainty that may be attributed to any quantitative comparison, value, measurement, or other representation.

These terms are also utilized herein to represent the degree by which a quantitative representation may vary from a stated reference without resulting in a change in the basic function of the subject matter at issue.

While particular embodiments have been illustrated and described herein, it should be understood that various other changes and modifications may be made without departing from the scope of the claimed subject matter.

The term "consisting essentially of" to describe a combination shall include the elements, ingredients, components or steps identified, and such other elements ingredients, components or steps that do not materially affect the basic and novel characteristics of the combination. The use of the terms "comprising" or "including" to describe combinations of elements, ingredients, components or steps herein also contemplates embodiments that consist essentially of, or even consist of the elements, ingredients, components or steps.

The present invention also relates to embodiments comprising combinations features of dependent claims.

Moreover, although various aspects of the claimed subject matter have been described herein, such aspects need not be utilized in combination.

It is therefore intended that the appended claims cover all such changes and modifications that are within the scope of the claimed subject matter.

| | |
|---|---|
| 10 | Thermal management system |
| 12 | Refrigeration loop |
| 14 | Compressor |
| 16 | Condenser |
| 18 | Expansion valve |
| 20 | Evaporator |
| 22 | High-pressure temperature sensor |
| 24 | Low-pressure temperature sensor |
| 26 | Cabin evaporator shutoff valve |
| 28 | Cabin evaporator expansion valve |
| 30 | Cabin evaporator |
| 32 | First valve |
| 34 | Second valve |
| 35 | External radiator channel |
| 36 | External radiator |
| 38 | External radiator fan |
| 40 | Ambient temperature sensor |
| 42 | External radiator bypass |
| 44 | External radiator coolant temperature sensor |
| 46 | Hydraulic pump |
| 48 | Power converter |
| 49 | Power source channel |
| 50 | Battery |
| 52 | Battery temperature sensor |
| 54 | Battery bypass valve |
| 56 | Resistive battery heater |
| 58 | Secondary cabin heat exchanger |
| 60 | Secondary cabin heat exchanger bypass valve |
| 61 | Chiller channel |
| 62 | Cabin heat exchanger |
| 64 | Cabin heat exchanger bypass valve |
| 66 | Cabin blower |
| 68 | Cabin temperature sensor |
| 70 | Resistive cabin heater |
| 71 | Drive unit channel |
| 72 | Drive unit |
| 74 | Electric coolant heater |
| 76 | Electric coolant heater temperature sensor |
| 78 | Expansion tank |
| 80 | First valve position one |
| 82 | First valve position two |
| 84 | Second valve position one |
| 86 | Second valve position two |

## Claims

1. A thermal management system (10) for a vehicle comprising:
a) a refrigeration loop (12) which includes:
i. a compressor (14),
ii. a condenser (16),
iii. an expansion valve (18), and
iv. an evaporator (20);
b) a first valve (32);
c) a second valve (34);
d) coolant;
e) one or more hydraulic pumps; and
f) coolant passages including:
i. an external radiator channel (35),
ii. a chiller channel (61),
iii. a power source channel (49), and
iv. a drive unit channel (71);
wherein each coolant passage is in fluid communication with the first valve (32) at one end of the coolant passage and in fluid communication with the second valve (34) at an opposite end of the coolant passage;
wherein the first valve (32) and the second valve (34) direct the flow of coolant through one of the following paths based on a control signal:
a series cooling path wherein coolant is pumped through a closed loop consisting sequentially of the external radiator channel (35) through the chiller channel (61), the power source channel (49), and the drive unit channel (71);
a series heating path wherein the coolant is pumped through a closed loop consisting sequentially of the external radiator channel (35) through the drive unit channel (71), the power source channel (49), and the chiller channel (61);
a parallel cooling path wherein the coolant is pumped in one closed loop consisting sequentially of the external radiator channel (35) to the drive unit channel (71), and, in parallel, coolant is pumped in another closed loop consisting sequentially of the chiller channel (61) to the power source channel (49); or
a parallel heating path wherein the coolant is pumped in one closed loop consisting sequentially of the external radiator channel (35) to the chiller channel (61), and, in parallel, coolant is pumped in another closed loop consisting sequentially of the power source channel (49) to the drive unit channel (71).

2. The thermal management system (10) of Claim 1, wherein the first valve (32), the second valve (34), or both are hydraulic 4-way valves.

3. The thermal management system (10) of Claim 2, wherein the hydraulic 4-way valves allow for pressure to be released from a first parallel loop to a second parallel loop.

4. The thermal management system (10) of Claim 1, wherein the thermal management system (10) includes an ambient temperature sensor, a cabin temperature sensor, a battery temperature sensor, one or more coolant temperature sensors, or any combination thereof.

5. The thermal management system (10) of Claim 4, wherein the series cooling path is used when the ambient temperature is low or during charging of the battery.

6. The thermal management system (10) of Claim 4, wherein the series heating path is used when the battery, the cabin, or both require heat but the ambient temperature is too low to act as a supplementary energy source.

7. The thermal management system (10) of Claim 4, wherein the parallel cooling path is used when the ambient temperature is high.

8. The thermal management system (10) of Claim 4, wherein the parallel heating path is used when the ambient temperature is low and the battery, the cabin, or both require heating, but the ambient temperature is sufficiently high to run the refrigeration loop (12).

9. The thermal management system (10) of Claim 1, wherein the condenser (16) is a liquid cooled condenser (16) and the condenser (16) adds heat to the coolant in the drive unit channel (71).

10. The thermal management system (10) of Claim 4, wherein the control signal determines the first valve (32) position and the second valve (34) position based on an ambient temperature, a battery temperature, a coolant temperature, or any combination thereof.

11. The thermal management system (10) of Claim 1, wherein coolant is optionally routed through or around an external radiator, a battery, a cabin heat exchanger, a secondary cabin heat exchanger, or any combination thereof.

12. A thermal management process for operating a system according to any of the preceding claims, comprising the steps of providing a system according to any of the preceding claims, and:
a) detecting a radiator temperature, a battery temperature, a drive unit temperature, an ambient temperature, a cabin temperature, or any combination thereof through an ambient temperature sensor, a cabin temperature sensor, a battery temperature sensor, one or more coolant temperature sensors, or any combination thereof;
b) determining if a battery needs to be heated or cooled based on a difference between the battery temperature and a battery operating temperature range;
c) determining whether a cabin needs to be heated or cooled based on a difference between the cabin temperature and a cabin temperature setting;
d) adjusting a first valve (32) and a second valve (34) based on the difference between the battery temperature and a battery operating temperature range, the difference between the cabin temperature and a cabin temperature setting, the ambient temperature, the drive unit temperature, or any combination thereof;
e) one or more pumps pumping coolant through an external radiator channel (35), a chiller channel (61), a power source channel (49), and a drive unit channel (71); and
f) a refrigeration loop (12) operating to pump heat from an evaporator (20) to a condenser (16).

13. The thermal management process of Claim 12, wherein the refrigeration loop (12) may cease pumping based on the ambient temperature.

14. A thermal management system (10) according to claim 1,
wherein the thermal management system (10) includes an ambient temperature sensor, a cabin temperature sensor, a battery temperature sensor, one or more coolant temperature sensors, or any combination thereof;
wherein the refrigeration loop (12) only operates when the ambient temperature is above a predetermined threshold; and
wherein the first valve (32) and the second valve (34) positions are determined based on the following:
the first valve (32) is in the first position and the second valve (34) is in the first position if the ambient temperature is low and the cabin, the battery, or both need cooling;
the first valve (32) is in the second position and the second valve (34) is in the second position if ambient temperature is low and the cabin, the battery, or both need heating;
the first valve (32) is in the first position and the second valve (34) is in the second position if the cabin, the battery, or both need cooling below the ambient temperature; or
the first valve (32) is in the second position and the second valve (34) is in the first position if the ambient temperature is low but sufficiently high that the refrigeration loop (12) may operate as a heat pump to heat the cabin, the battery, or both.

15. The thermal management system of Claim 14, wherein the predetermined threshold is -10°C.

## Patentansprüche

1. Wärmeverwaltungssystem (10) für ein Kraftfahrzeug, aufweisend:
a) Einen Kältekreislauf (12), der umfasst:
i. einen Verdichter (14),
ii. einen Kondensator (16),
iii. ein Expansionsventil (18) und
iv. einen Verdampfer (20);
b) ein erstes Ventil (32);
c) ein zweites Ventil (34);
d) Kühlmittel;
e) eine oder mehrere hydraulische Pumpen; und
f) Kühlmitteldurchlässe, umfassend:
i. einen Außenradiatorkanal (35),
ii. einen Kühlerkanal (61),
iii. einen Stromquellenkanal (49) und
iv. einen Antriebseinheitskanal (71);
wobei jeder Kühlmitteldurchlass an einem Ende des Kühlmitteldurchlasses in Fluidverbindung mit dem ersten Ventil (32) steht und an einem entgegengesetzten Ende des Kühlmitteldurchlasses in Fluidverbindung mit dem zweiten Ventil (34) steht;
wobei das erste Ventil (32) und das zweite Ventil (34) den Kühlmittelstrom auf der Grundlage eines Steuersignals durch einen der folgenden Pfade leiten:
einen Reihenkühlpfad, bei dem Kühlmittel durch eine geschlossene Schleife gepumpt wird, die aus einer Reihe mit dem Außenradiatorkanal (35) und durch den Kühlerkanal (61), den Stromquellenkanal (49) und den Antriebseinheitskanal (71) hindurch besteht;
einen Reihenheizpfad, bei dem Kühlmittel durch eine geschlossene Schleife gepumpt wird, die aus einer Reihe mit dem Außenradiatorkanal (35) und durch den Antriebseinheitskanal (71), den Stromquellenkanal (49) und den Kühlerkanal (61) hindurch besteht;
einen Parallelkühlpfad, bei dem das Kühlmittel in einer geschlossenen Schleife gepumpt wird, die aus einer Reihe mit dem Außenradiatorkanal (35) zu dem Antriebseinheitskanal (71) hin besteht, und bei dem parallel dazu Kühlmittel in einer anderen geschlossenen Schleife gepumpt wird, die aus einer Reihe mit dem Kühlerkanal (61) zu dem Stromquellenkanal (49) hin besteht; oder
einen Parallelheizpfad, bei dem das Kühlmittel in einer geschlossenen Schleife gepumpt wird, die aus einer Reihe mit dem Außenradiatorkanal (35) zu dem Kühlerkanal (61) hin besteht, und bei dem parallel dazu Kühlmittel in einer anderen geschlossenen Schleife gepumpt wird, die aus einer Reihe mit dem Stromquellenkanal (49) zu dem Antriebseinheitskanal (71) hin besteht.

2. Wärmeverwaltungssystem (10) nach Anspruch 1, bei dem das erste Ventil (32), das zweite Ventil (34) oder beide hydraulische 4-Wege-Ventile sind.

3. Wärmeverwaltungssystem (10) nach Anspruch 2, bei dem es die hydraulischen 4-Wege-Ventile erlauben, von einer ersten parallelen Schleife zu einer zweiten parallelen Schleife Druck abzulassen.

4. Wärmeverwaltungssystem (10) nach Anspruch 1, wobei das Wärmeverwaltungssystem (10) einen Umgebungstemperatursensor, einen Passagierraumtemperatursensor, einen Batterietemperatursensor, einen oder mehrere Kühlmitteltemperatursensoren oder jegliche Kombination daraus umfasst.

5. Wärmeverwaltungssystem (10) nach Anspruch 4, bei dem der Reihenkühlpfad genutzt wird, wenn die Umgebungstemperatur niedrig ist, oder während eines Ladens der Batterie.

6. Wärmeverwaltungssystem (10) nach Anspruch 4, bei dem der Reihenheizpfad genutzt wird, wenn die Batterie, der Passagierraum oder beides Wärme benötigen, aber die Umgebungstemperatur zu niedrig ist, um als ergänzende Energiequelle zu dienen.

7. Wärmeverwaltungssystem (10) nach Anspruch 4, bei dem der Parallelkühlpfad genutzt wird, wenn die Umgebungstemperatur hoch ist.

8. Wärmeverwaltungssystem (10) nach Anspruch 4, bei dem der Parallelheizpfad genutzt wird, wenn die Umgebungstemperatur niedrig ist und die Batterie, der Passagierraum oder beides Wärme benötigen, aber die Umgebungstemperatur ausreichend hoch ist, um den Kältekreislauf (12) zu betreiben.

9. Wärmeverwaltungssystem (10) nach Anspruch 1, bei dem der Kondensator (16) ein mit Flüssigkeit gekühlter Kondensator ist (16) und der Kondensator (16) das Kühlmittel im dem Antriebseinheitskanal (71) mit Wärme beaufschlagt.

10. Wärmeverwaltungssystem (10) nach Anspruch 4, bei dem das Steuersignal die Stellung des ersten Ventils (32) und die Stellung des zweiten Ventils (34) auf der Grundlage einer Umgebungstemperatur, einer Batterietemperatur, einer Kühlmitteltemperatur oder jeglicher Kombination davon bestimmt.

11. Wärmeverwaltungssystem (10) nach Anspruch 1, bei dem Kühlmittel optional durch oder um einen Außenradiator, eine Batterie, einen Passagierraumwärmetauscher, einen nachgeordneten Passagierraumwärmetauscher oder jegliche Kombination daraus geführt wird.

12. Wärmeverwaltungsverfahren zum Betreiben eines Systems gemäß einem der vorhergehenden Ansprüche, aufweisend die Schritte des Bereitstellens eines Systems gemäß einem der vorhergehenden Ansprüche und:
a) Erfassen einer Radiatortemperatur, einer Batterietemperatur, einer Antriebseinheitstemperatur, einer Umgebungstemperatur, einer Passagierraumtemperatur oder jeglicher Kombination von diesen mittels eines Umgebungstemperatursensors, eines Passagierraumtemperatursensors, eines Batterietemperatursensors, eines oder mehrerer Kühlmitteltemperatursensoren oder jeglicher Kombination aus diesen;
b) Bestimmen, ob eine Batterie beheizt oder gekühlt werden muss, auf der Grundlage eines Unterschiedes zwischen der Batterietemperatur und einem Batteriebetriebstemperaturbereich;
c) Bestimmen, ob ein Passagierraum beheizt oder gekühlt werden muss, auf der Grundlage eines Unterschieds zwischen der Passagierraumtemperatur und einer Passagierraumtemperatureinstellung;
d) Einstellen eines ersten Ventils (32) und eines zweiten Ventils (34) auf der Grundlage des Unterschieds zwischen der Batterietemperatur und einem Batteriebetriebstemperaturbereich, des Unterschieds zwischen der Passagierraumtemperatur und einer Passagierraumtemperatureinstellung, der Umgebungstemperatur, der Antriebseinheitstemperatur oder jeglicher Kombination dieser Größen;
e) wobei eine oder mehrere Pumpen Kühlmittel durch einen Außenradiatorkanal (35), einen Kühlerkanal (61), einen Stromquellenkanal (49) und einen Antriebseinheitskanal (71) pumpen; und
f) wobei ein Kältekreislauf (12) so arbeitet, dass er Wärme von einem Verdampfer (20) zu einem Kondensator (16) pumpt.

13. Wärmeverwaltungsverfahren nach Anspruch 12, bei dem der Kältekreislauf (12) je nach der Umgebungstemperatur das Pumpen einstellen kann.

14. Wärmeverwaltungssystem (10) nach Anspruch 1,
wobei das Wärmeverwaltungssystem (10) einen Umgebungstemperatursensor, einen Passagierraumtemperatursensor, einen Batterietemperatursensor, einen oder mehrere Kühlmitteltemperatursensoren oder jegliche Kombination aus diesen umfasst;
wobei der Kältekreislauf (12) nur arbeitet, wenn die Umgebungstemperatur oberhalb eines vorbestimmten Schwellwerts liegt; und
wobei die Stellungen des ersten Ventils (32) und des zweiten Ventils (34) auf der Grundlage des Folgenden bestimmt werden:
das erste Ventil (32) ist in der ersten Stellung und das zweite Ventil (34) ist in der ersten Stellung, wenn die Umgebungstemperatur niedrig ist und der Passagierraum, die Batterie oder beides einer Kühlung bedürfen;
das erste Ventil (32) ist in der zweiten Stellung und das zweite Ventil (34) ist in der zweiten Stellung, wenn die Umgebungstemperatur niedrig ist und der Passagierraum, die Batterie oder beides eines Heizens bedürfen;
das erste Ventil (32) ist in der ersten Stellung und das zweite Ventil (34) ist in der zweiten Stellung, wenn der Passagierraum, die Batterie oder beides einer Kühlung unterhalb der Umgebungstemperatur bedürfen; oder
das erste Ventil (32) ist in der zweiten Stellung und das zweite Ventil (34) ist in der ersten Stellung, wenn die Umgebungstemperatur niedrig ist, aber ausreichend hoch, dass der Kältekreislauf (12) als Wärmepumpe arbeiten kann, um den Passagierraum, die Batterie oder beide zu beheizen.

15. Wärmeverwaltungssystem (10) nach Anspruch 14, bei dem der vorbestimmte Schwellwert bei -10°C liegt.

## Revendications

1. Système de gestion thermique (10) pour un véhicule comprenant :
a) une boucle de réfrigération (12) qui comprend :
i. un compresseur (14),
ii. un condenseur (16),
iii. un détendeur (18), et
iv. un évaporateur (20) ;
b) une première vanne (32) ;
c) une deuxième vanne (34) ;
d) un liquide de refroidissement ;
e) une ou plusieurs pompes hydrauliques ; et
f) des passages de liquide de refroidissement comprenant :
i. un canal de radiateur externe (35),
ii. un canal de refroidisseur (61),
iii. un canal de source d'alimentation (49), et
iv. un canal d'unité d'entraînement (71) ;
dans lequel chaque passage de liquide de refroidissement est en communication fluide avec la première vanne (32) à une extrémité du passage de liquide de refroidissement et en communication fluide avec la deuxième vanne (34) à une extrémité opposée du passage de liquide de refroidissement ;
dans lequel la première vanne (32) et la deuxième vanne (34) sont agencés pour orienter le flux de liquide de refroidissement à travers l'un des chemins suivants en fonction d'un signal de commande :
- un chemin de refroidissement en série dans lequel le liquide de refroidissement est pompé à travers une boucle fermée constituée séquentiellement du canal de radiateur externe (35) à travers le canal de refroidisseur (61), le canal de source d'alimentation (49) et le canal d'unité d'entraînement (71) ;
- un chemin de chauffage en série dans lequel le liquide de refroidissement est pompé à travers une boucle fermée constituée séquentiellement du canal de radiateur externe (35) à travers le canal d'unité d'entraînement (71), le canal de source d'alimentation (49) et le canal de refroidisseur (61) ;
- un chemin de refroidissement en parallèle dans lequel le liquide de refroidissement est pompé dans une boucle fermée constituée séquentiellement du canal de radiateur externe (35) vers le canal d'unité d'entraînement (71), et, en parallèle, le liquide de refroidissement est pompé dans une autre boucle fermée constituée séquentiellement du canal de refroidisseur (61) vers le canal de source d'alimentation (49) ; ou
- un chemin de chauffage en parallèle dans lequel le liquide de refroidissement est pompé dans une boucle fermée constituée séquentiellement du canal de radiateur externe (35) au canal de refroidisseur (61), et, en parallèle, le liquide de refroidissement est pompé dans une autre boucle fermée constituée séquentiellement du canal de source d'alimentation (49) au canal d'unité d'entraînement (71).

2. Système de gestion thermique (10) selon la revendication 1, dans lequel la première vanne (32), la deuxième vanne (34) ou les deux sont des vannes hydrauliques à quatre voies.

3. Système de gestion thermique (10) selon la revendication 2, dans lequel les vannes hydrauliques à quatre voies sont agencées pour permettre de relâcher la pression d'une première boucle parallèle à une deuxième boucle parallèle.

4. Système de gestion thermique (10) selon la revendication 1, dans lequel le système de gestion thermique (10) comprend un capteur de température ambiante, un capteur de température d'habitacle, un capteur de température de batterie, un ou plusieurs capteurs de température de liquide de refroidissement, ou toute combinaison de ceux-ci.

5. Système de gestion thermique (10) selon la revendication 4, dans lequel le chemin de refroidissement en série est utilisé lorsque la température ambiante est basse ou pendant la charge de la batterie.

6. Système de gestion thermique (10) selon la revendication 4, dans lequel le chemin de chauffage en série est utilisé lorsque la batterie, l'habitacle ou les deux nécessitent de la chaleur mais que la température ambiante est trop basse pour servir de source d'énergie supplémentaire.

7. Système de gestion thermique (10) selon la revendication 4, dans lequel le chemin de refroidissement en parallèle est utilisé lorsque la température ambiante est élevée.

8. Système de gestion thermique (10) selon la revendication 4, dans lequel le chemin de chauffage en parallèle est utilisé lorsque la température ambiante est basse et que la batterie, l'habitacle ou les deux nécessitent du chauffage, mais que la température ambiante est suffisamment élevée pour faire fonctionner la boucle de réfrigération (12).

9. Système de gestion thermique (10) selon la revendication 1, dans lequel le condenseur (16) est un condenseur refroidi par liquide (16) et le condenseur (16) est agencé pour ajouter de la chaleur au liquide de refroidissement dans le canal de l'unité d'entraînement (71).

10. Système de gestion thermique (10) selon la revendication 4, dans lequel le signal de commande détermine la position de la première vanne (32) et la position de la deuxième vanne (34) en fonction d'une température ambiante, d'une température de batterie, d'une température de liquide de refroidissement ou de toute combinaison de celles-ci.

11. Système de gestion thermique (10) selon la revendication 1, dans lequel le liquide de refroidissement est éventuellement acheminé à travers ou autour d'un radiateur externe, d'une batterie, d'un échangeur de chaleur d'habitacle, d'un échangeur de chaleur d'habitacle secondaire ou de toute combinaison de ceux-ci.

12. Procédé de gestion thermique pour faire fonctionner un système selon l'une quelconque des revendications précédentes, comprenant les étapes consistant à fournir un système selon l'une quelconque des revendications précédentes, et :
a) mesurer une température de radiateur, une température de batterie, une température d'unité de commande, une température ambiante, une température d'habitacle ou toute combinaison de celles-ci, par l'intermédiaire d'un capteur de température ambiante, d'un capteur de température d'habitacle, d'un capteur de température de batterie, d'un ou plusieurs capteurs de température de liquide de refroidissement ou toute combinaison de ceux-ci ;
b) déterminer si une batterie doit être chauffée ou refroidie en fonction d'une différence entre la température de batterie et une plage de températures de fonctionnement de la batterie ;
c) déterminer si un habitacle doit être chauffée ou refroidie en fonction d'une différence entre la température de la cabine et une température prédéterminée de la cabine ;
d) régler une première vanne (32) et une deuxième vanne (34) en fonction de la différence entre la température de la batterie et une plage de températures de fonctionnement de la batterie, de la différence entre la température de la cabine et une température prédéterminée de la cabine, de la température ambiante, de la température de l'unité de commande ou de toute combinaison de celles-ci ;
e) une ou plusieurs pompes agencée(s) pour pomper du liquide de refroidissement à travers un canal de radiateur externe (35), un canal de refroidisseur (61), un canal de source d'alimentation (49) et un canal d'unité d'entraînement (71) ; et
f) une boucle de réfrigération (12) fonctionnant pour pomper la chaleur d'un évaporateur (20) vers un condenseur (16).

13. Procédé de gestion thermique selon la revendication 12, dans lequel la boucle de réfrigération (12) est agencée pour pouvoir cesser de pomper en fonction de la température ambiante.

14. Système de gestion thermique (10) selon la revendication 1,
dans lequel le système de gestion thermique (10) comprend un capteur de température ambiante, un capteur de température d'habitacle, un capteur de température de batterie, un ou plusieurs capteurs de température de liquide de refroidissement, ou toute combinaison de ceux-ci ;
dans lequel la boucle de réfrigération (12) fonctionne seulement lorsque la température ambiante est supérieure à un seuil prédéterminé ; et
dans lequel les positions de la première vanne (32) et de la deuxième vanne (34) sont déterminées sur la base des éléments suivants :
- la première vanne (32) est dans la première position et la deuxième vanne (34) est dans la première position si la température ambiante est basse et que l'habitacle, la batterie ou les deux ont besoin d'être refroidi(s) ;
- la première vanne (32) est dans la deuxième position et la deuxième vanne (34) est dans la deuxième position si la température ambiante est basse et que l'habitacle, la batterie ou les deux ont besoin d'être chauffé(s) ;
- la première vanne (32) est dans la première position et la deuxième vanne (34) est dans la deuxième position si l'habitacle, la batterie ou les deux ont besoin d'être refroidi(s) en dessous de la température ambiante ; ou
- la première vanne (32) est dans la deuxième position et la deuxième vanne (34) est dans la première position si la température ambiante est basse mais suffisamment élevée pour que la boucle de réfrigération (12) puisse fonctionner comme une pompe à chaleur pour chauffer l'habitacle, la batterie ou les deux.

15. Procédé de gestion thermique selon la revendication 14, dans lequel le seuil prédéterminé est de -10°C.
